# EUROPEAN PATENT APPLICATION

(11) **EP 4 618 031 A1**
(43) Date of publication of application: **17.09.2025**
(21) Application number: 25155976.1
(22) Date of filing: 05.02.2025
(51) Int. Cl.: G06V 10/40, G06V 20/40

(54) **COMPUTER-READABLE RECORDING MEDIUM, INFORMATION PROCESSING METHOD, AND INFORMATION PROCESSING DEVICE**

(30) Priority: 12.03.2024 IL 31141924
(71) Applicant: FUJITSU LIMITED, Kawasaki-shi, Kanagawa 211-8588 (JP); B.G. NEGEV TECHNOLOGIES AND APPLICATIONS LTD., at Ben-Gurion University, 841050 Beer Sheva (IL)
(72) Inventor: Higuchi, Yuji, Kawasaki-shi, Kanagawa, 211-8588 (JP); Machida, Takanori, Kawasaki-shi, Kanagawa, 211-8588 (JP); Kokubo, Hirotaka, Kawasaki-shi, Kanagawa, 211-8588 (JP); Fujishima, Yuki, Kawasaki-shi, Kanagawa, 211-8588 (JP); Murakami, Masahiko, Kawasaki-shi, Kanagawa, 211-8588 (JP); Hofman, Omer, 841050 Beer Sheva (IL); Giloni, Amit, 841050 Beer Sheva (IL); Elovici, Yuval, 841050 Beer Sheva (IL); Shabtai, Asaf, 841050 Beer Sheva (IL)
(74) Representative: Hoffmann Eitle

(57) **Abstract**

For each pair of two chronologically contiguous frames 111, an information processing device 100 calculates a first index value representing a degree of overlap between regions each identified from a corresponding one of the paired two frames 111. For each pair of two sequentially contiguous frames 111, the information processing device 100 calculates a second index value representing a degree of similarity between the paired two frames 111 with respect to a predetermined type of feature. To identify remaining frames 111, the information processing device 100, excludes from a series of frames 111, a certain number of frames 111 anterior and posterior to a pair at least whose first index value is less than a first threshold value or whose second index value is less than a second threshold value. The information processing device 100 extracts a frame 111 whose degree of similarity in the predetermined type of feature to another frame among the remaining frames 111 satisfies a predetermined condition.

## Description

### FIELD OF THE INVENTION

Embodiments discussed herein relate to a computer-readable recording medium, an information processing method, and an information processing device.

### BACKGROUND OF THE INVENTION

One existing machine learning model recognizes regions reflecting an object in frames of moving image data and calculates, for each class, a degree of certainty that represents a likelihood that the object is classified into the class. Here, there is a patch attack that degrades accuracy of the machine learning model by presenting a specific patch within a frame. The specific patch is also called an adversarial patch. The patch attack lowers the degree of certainty calculated by the machine learning model for a class to which an object correctly belongs, and increases the degree of certainty for a class to which the object does not belong. To address this, according to an existing technique called prototype-k-nearest neighbor (kNN), multiple samples of a region reflecting an object are prepared to thereby detect a patch attack.

One example of a prior art is a technique of excluding, from targets to be processed, target images classified as reflecting, for example, a structure other than an overhead line. As for a composite image, for example, there is a technique of selecting the composite image, as training data, when the degree that a first element image arranged in the background is shielded by a second element image arranged in the foreground is not more than an upper limit. For example, there is also a technique of determining a classification result of a medium by using a first machine learning model and further using a second machine learning model to determine whether sharing the medium is desirable. For example, there is also another technique of determining a label corresponding to an input vector, based on the degree of similarity between the input vector and one or more training vectors. For examples, refer to Japanese Laid-Open Patent Publication No. 2022-036054, Japanese Laid-Open Patent Publication No. 2022-026456, U.S. Patent Application Publication No. 2018/0374105, and U.S. Patent Application Publication No. 2020/0210888.

### SUMMARY OF THE INVENTION

It is an object in one aspect of the embodiments to at least solve the above problems in the conventional technologies.

According to an aspect of an embodiment, a computer-readable recording medium having stored therein a program for causing a computer to execute a process, the process includes: performing segmentation to each frame of a series of frames reflecting an object, and thereby identifying a region reflecting the object in the each frame; for each pair of two chronologically contiguous frames among the series of frames, determining whether a first index value representing a degree of overlap between regions is at least equal to a first threshold value, the regions each being identified from a corresponding one of the pair of two chronologically contiguous frames; for each pair of two sequentially contiguous frames among the series of frames, determining whether a second index value representing a degree of similarity between the pair of two sequentially contiguous frames with respect to a specific type of feature is at least equal to a second threshold value; identifying remaining frames obtained by excluding, from the series of frames, a number of sequentially contiguous frames anterior and posterior to the pair for which the first index is determined to be less than the first threshold value and/or for which the second index is determined to be less than the second threshold value, the number being inclusive of the pair; and extracting, among the identified remaining frames, a first frame whose degree of similarity to a second frame with respect to the specific type of feature satisfies a specific condition.

### BRIEF DESCRIPTION OF DRAWINGS

Fig. 1 is an explanatory view of a practical example of an information processing method according to an embodiment.
Fig. 2 is an explanatory view of an example of an information processing system 200.
Fig. 3 is a block diagram depicting an example of a hardware configuration of an information processing device 100.
Fig. 4 is a block diagram of an example of a functional configuration of the information processing device 100.
Fig. 5 is an explanatory view of an example of operation of the information processing device 100.
Fig. d 6 is an explanatory view of the example of operation of the information processing device 100.
Fig. 7 is a flowchart depicting an example of an overall processing procedure.
Fig. 8 is a flowchart depicting the example of the overall processing procedure.

### DESCRIPTION OF THE INVENTION

First problems associated with the conventional techniques are discussed. In the prior arts, it is difficult to obtain samples suitable for use in the prototype-kNN. For example, in the case of generating samples by extracting frames at regular time intervals from among a series of frames obtained by shooting the same object while changing the shooting direction, the number of samples having a similar image feature increases, which may degrade performance of the prototype-kNN.

Preferred embodiments of a computer-readable recording medium, an information processing method, and an information processing device according to the present invention are explained with reference to the accompanying drawings.

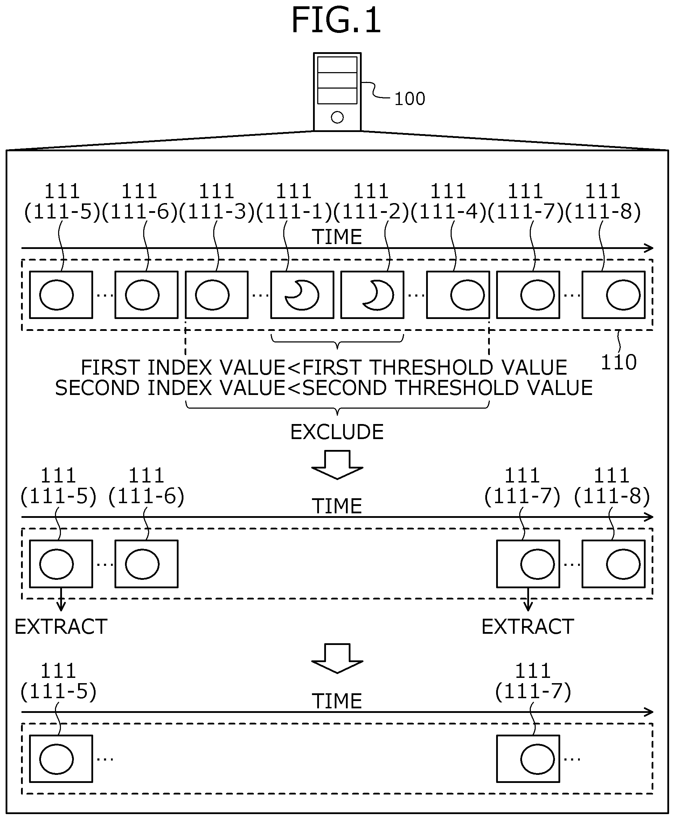

Fig. 1 is an explanatory view of a practical example of an information processing method according to an embodiment. An information processing device 100 is a computer for obtaining multiple samples suitable for use in prototype-kNN. The information processing device 100 is, for example, a server or a personal computer (PC).

One existing machine learning model is called an object detection model. The object detection model has a function of recognizing a region where an object appears in a frame, identifying the type of the object, and calculating, for each class, a degree of certainty that represents a likelihood that the object is classified into the class. The degree of certainty is a value at least equal to 0 but not more than 1. The object detection model is, for example, YOLO or Faster region-based convolutional neural networks (RCNN). For example, "YOLO: Real-Time Object Detection", [online], [searched June 20, 2023], Internet < URL : https://pjreddie.com/darknet/yolo/> may be referred to regarding YOLO. For example, Ren, Shaoqing, et al, "Faster r-cnn: Towards real-time object detection with region proposal networks." Advances In Neural Information Processing Systems 28 (2015) may be referred to regarding Faster RCNN.

Here, there is a patch attack that degrades accuracy of the object detection model by presenting an adversarial patch within a frame. For example, by attaching an adversarial patch to an object, the adversarial patch may be presented in a frame reflecting the object. For example, by combining an adversarial patch in a frame reflecting an object, the adversarial patch may be presented in the frame reflecting the object. The patch attack lowers the degree of certainty calculated by the object detection model for a class into which classification of an object is correct and increases the degree of certainty for a class into which classification of the object is incorrect. Accordingly, as a result of a patch attack, the class to which the object belongs will incorrectly be recognized. For example, Brown, Tom B., et al, "Adversarial patch." arXiv preprint arXiv: 1712.09665 (2017) and Liu, Xin, et al, "Dpatch: An adversarial patch attack on object detectors." arXiv preprint arXiv: 1806.02299 (2018) may be referred to regarding a patch attack.

To address this, according to an existing technique called prototype-kNN, multiple samples of a region reflecting an object are prepared to thereby detect a patch attack. The samples are called, for example, prototypes. The prototype-kNN utilizes, for example, a feature space of scale invariant feature transform (SIFT). kNN is a technique of determining the class into which a target frame is to be classified, based on k samples in the vicinity of the target frame on an SIFT feature space.

Here, the samples for use in the prototype-kNN may preferably include a lot of samples with differing image features, but it is undesirable for the samples to include a lot of samples with similar image features. For example, there is a problem in that when there are fewer samples with differing image features, the accuracy of detecting a patch attack by the prototype-kNN tends to decrease. For example, there is a problem in that when there are samples with similar image features, the processing time required when detecting a patch attack by the prototype-kNN tends to increase.

It is therefore desirable to prepare samples suitable for use in the prototype-kNN. In the prior arts, however, it is difficult to obtain samples suitable for use in the prototype-kNN.

For example, a first technique is conceivable in which a frame is extracted at regular time intervals from among a series of frames obtained by shooting the same object while changing the shooting direction, to thereby employ, as samples, regions that reflect the object and that are cut out from each of the extracted frames by segmentation. This first technique may possibly employ, as the samples for use in the prototype-kNN, regions that are unsuitable in terms of segmentation accuracy, such as regions containing background in addition to the object or regions not containing the entire object. This may lead to reduced accuracy in detecting a patch attack by the prototype-kNN. Further, more samples with similar image features result in the problem of the processing time tending to increase when detecting a patch attack by the prototype-kNN.

For example, a second technique is conceivable in which an operator extracts frames from among the series of frames, cuts out regions reflecting an object from each of the extracted frames, and employs the regions as samples. This second technique has a problem in that the manual burden placed on the operator increases.

Thus, in the present embodiment, an information processing method is described that is capable of obtaining multiple samples suitable for use in the prototype-kNN.

In Fig. 1, the information processing device 100 obtains a series of frames 111 reflecting an object. For example, the information processing device 100 obtains the series of frames 111 contained in moving image data 110.

(1-1) The information processing device 100 carries out segmentation for each frame of the series of frames, to thereby identify a region reflecting an object in the frame.

(1-2) For each pair of two chronologically contiguous frames 111 among the series of frames 111, the information processing device 100 calculates a first index value that represents a degree of overlap between regions each identified from a corresponding one of the paired two frames 111. The first index value is, for example, an index value based on intersection over union (IoU). For each pair of two frames 111, the information processing device 100 determines whether the calculated first index value is at least equal to a first threshold value.

This enables the information processing device 100 to obtain a guide for identifying a region unsuitable as a sample used in the prototype-kNN. For example, a region identified from each of the paired two frames 111 whose first index value is determined to be less than the first threshold value is considered as having a relatively high probability of containing a background and hence considered to be unsuitable as a sample.

(1-3) For each pair of two sequentially contiguous frames 111 among the series of frames 111, the information processing device 100 calculates a second index value that represents a degree of similarity between the paired two frames 111, with respect to a predetermined type of feature. The second index value is, for example, an index value based on SIFT. For each pair of two frames 111, the information processing device 100 determines whether the calculated second index value is at least equal to a second threshold value.

This enables the information processing device 100 to obtain a guide for identifying a region unsuitable as a sample used in the prototype-kNN. For example, regions identified, respectively, from the paired two frames 111 whose second index value is determined to be less than the second threshold value is considered as having a relatively high probability of containing another object and hence considered to be unsuitable as a sample.

(1-4) The information processing device 100 identifies a pair determined to be less than the first threshold value and/or less than the second threshold value, among the series of frames 111. In the example depicted in Fig. 1, for example, the information processing device 100 identifies a pair consisting of frames 111-1 and 111-2. The information processing device 100 identifies remaining frames 111 obtained by excluding from the series of frames 111, a certain number of sequentially contiguous frames anterior and posterior to the identified pair, the certain number being inclusive of the identified pair. For example, the certain number is set in advance by the user.

In the example depicted in Fig. 1, for example, the information processing device 100 excludes a frame 111-3 to a frame 111-4, from the series of frames 111. For example, as a consequence of the exclusion, the information processing device 100 identifies, as the remaining frames 111, a frame 111-5 to a frame 111-6 and a frame 111-7 to a frame 111-8. This enables the information processing device 100 to exclude frames 111 containing a region unsuitable as a sample and to leave frames 111 containing a region suitable as a sample.

(1-5) From among the identified remaining frames 111, the information processing device 100 extracts frames 111 whose degree of similarity for a predetermined type of feature with respect to the other frames 111 satisfies a predetermined condition. The predetermined condition is, for example, that the degree of similarity for a predetermined type of feature with respect to the other frames 111 is relatively small. This allows the information processing device 100 to exclude from the frames 111 each containing a region suitable as a sample, frames 111 that are similar in terms of image feature.

Thus, the information processing device 100 may facilitate obtaining samples suitable for use in the prototype-kNN. For example, the information processing device 100 may generate samples suitable for use in the prototype-kNN, based on regions identified from the extracted frames. The information processing device 100 may improve the accuracy of detecting a patch attack by the prototype-kNN. The information processing device 100 may reduce the processing time required when detecting a patch attack by the prototype-kNN.

While a case is described in which the function of the information processing device 100 is implemented by a single computer, this is not limitative. For example, the function of the information processing device 100 may be implemented by cooperation among multiple computers. For example, the function of the information processing device 100 may be implemented on a cloud.

While case is described in which for each pair of two chronologically contiguous frames 111, the information processing device 100 calculates the first index value that represents a degree of overlap between regions identified, respectively, from the paired two frames 111, this is not limitative. For example, the information processing device 100 may receive the first index value from another computer having the function of calculating the first index value.

While a case is described in which for each pair of two sequentially contiguous frames 111, the information processing device 100 calculates the second index value that represents a degree of similarity between the paired two frames 111 with respect to a predetermined type of feature, this is not limitative. For example, the information processing device 100 may receive the second index value from another computer having the function of calculating the second index value.

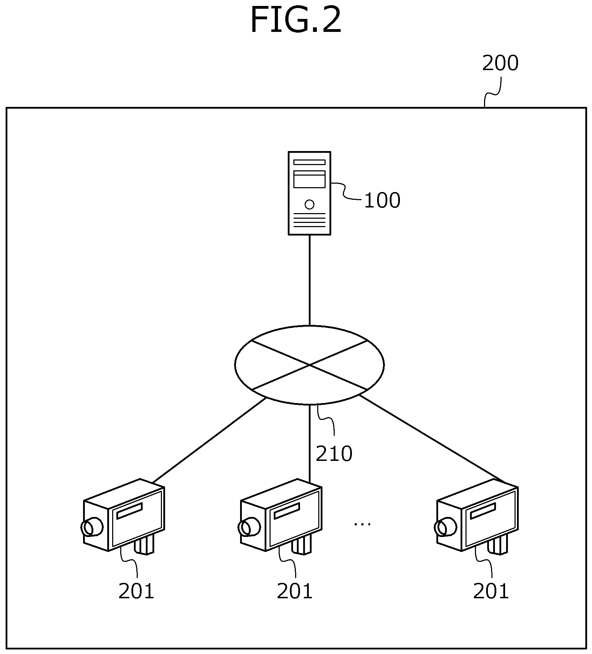

With reference to Fig. 2, an example of an information processing system 200 is described to which the information processing device 100 depicted in Fig. 1 is applied.

Fig. 2 is an explanatory view of the example of the information processing system 200. In Fig. 2, the information processing system 200 includes the information processing device 100 and one or more image capturing devices 201.

In the information processing system 200, the information processing device 100 and the image capturing devices 201 are connected via wires or a wireless network 210. The network 210 is, for example, local region network (LAN), wide region network (WAN), or the Internet.

The information processing device 100 is a computer for implementing the prototype-kNN. The information processing device 100 receives a series of frames from the image capturing devices 201. The information processing device 100 carries out segmentation for each frame of the series of frames, to thereby identify a region reflecting an object in the frame.

For each pair of two chronologically contiguous frames among the series of frames, the information processing device 100 calculates a first index value that represents a degree of overlap between regions, respectively, identified from the paired two frames. The first index value is, for example, an index value based on IoU. For each pair of two frames, the information processing device 100 determines whether the calculated first index value is at least equal to a first threshold value.

For each pair of two sequentially contiguous frames among the series of frames, the information processing device 100 calculates a second index value that represents a degree of similarity between the paired two frames with respect to a predetermined type of feature. The second index value is, for example, an index value based on SIFT. For each pair of two frames, the information processing device 100 determines whether the calculated second index value is at least equal to a second threshold value.

The information processing device 100 identifies a pair determined to be less than the first threshold value and/or less than the second threshold value, among the series of frames. The information processing device 100 identifies remaining frames obtained by excluding, from the series of frames, a certain number of sequentially contiguous frames anterior and posterior to the identified pair, the certain number being inclusive of the identified pair. From among the identified remaining frames, the information processing device 100 extracts frames whose degree of similarity with respect to the other frames for a predetermined type of feature satisfies a predetermined condition.

The information processing device 100 employs, as samples for use in the prototype-kNN, regions identified, respectively, from the extracted frames. The information processing device 100 uses the samples to implement the prototype-kNN. The information processing device 100 is, for example, a server or a PC.

The image capturing device 201 is a computer that generates frames reflecting an object. The image capturing device 201 includes, for example, multiple imaging devices. The image capturing device 201 generates frames obtained by shooting a specific region by the imaging devices. When an object lies in the specific region, the image capturing device 201 generates frames reflecting the object. The image capturing device 201 transmits a series of continuously generated frames to the information processing device 100. The image capturing device 201 is, for example, a digital camera. The image capturing device 201 is, for example, a camera for shooting a fixed point. The image capturing device 201 may be, for example, movable. The image capturing device 201 is, for example, a surveillance camera.

An example of application of the information processing system 200 is described. The information processing system 200 is applicable to, for example, a case of supporting checkout operations at a register by recognizing a product reflected in the frame. For example, a patch attack is conceivable that attempts to induce misidentification of a product by attaching an adversarial patch to the product. To address this, the information processing device 100 may implement the prototype-kNN such that the patch attack may be detected with high accuracy. The information processing device 100 may easily avert damage attributable to misidentification of a product. The information processing device 100 may easily prevent a legitimate customer not an attacker from being misidentified as an attacker. Thus, the information processing device 100 may improve customer convenience, safety, etc.

The information processing system 200 is applicable to, for example, a case of supporting monitoring operations of searching for a wanted or missing person, etc., or detecting an intruder or a suspicious person, etc., by recognizing a person reflected in a frame. For example, a patch attack is conceivable that tries to induce misidentification of a person by attaching an adversarial patch to the face. To address this, the information processing device 100 may implement the prototype-kNN such that the patch attack may be detected with high accuracy. The information processing device 100 may easily avert damage attributable to misidentification of a person. The information processing device 100 may easily prevent a legitimate person not a suspicious person or the like from being misidentified as a suspicious person or the like.

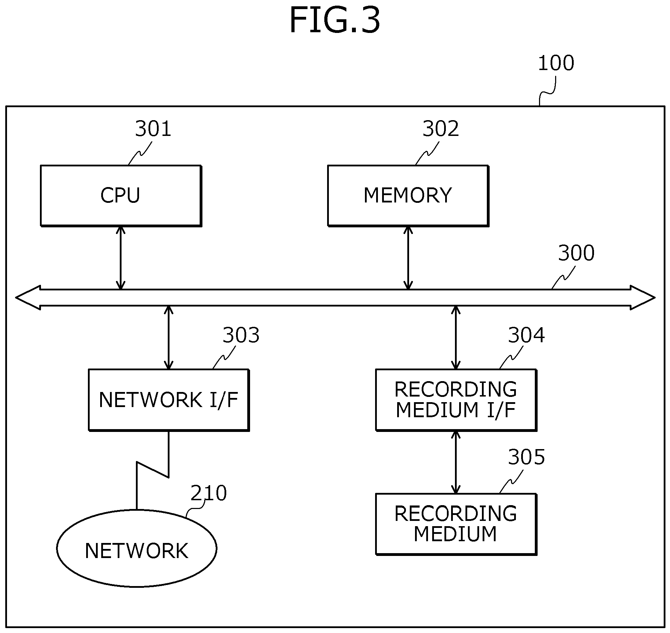

Next, an example of a hardware configuration of the information processing device 100 is described with reference to Fig. 3

Fig. 3 is a block diagram depicting an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected by a bus 300.

Here, the CPU 301 governs overall control of the information processing device 100. The memory 302, for example, includes read-only memory (ROM), random access memory (RAM), and flash ROM, etc. In particular, for example, the flash ROM and/or ROM store various types of programs, and the RAM is used as a work area by the CPU 301. Programs stored to the memory 302 are loaded onto the CPU 301, whereby encoded processes are executed by the CPU 301.

The network I/F 303 is connected to a network 210 through a communications line and is connected to other computers via the network 210. Further, the network I/F 303 administers an internal interface with the network 210 and controls the input and output of data from other computers. The network I/F 303, for example, is a modem, a LAN adapter, etc.

The recording medium I/F 304, under the control of the CPU 301, controls the reading and writing of data with respect to the recording medium 305. The recording medium I/F 304 is, for example, a disk drive, a solid-state drive (SSD), a universal serial bus (USB) port, etc. The recording medium 305 is a non-volatile memory storing therein data written thereto under the control of the recording medium I/F 304. The recording medium 305 is, for example, a disk, a semiconductor memory, a USB memory, etc. The recording medium 305 may be removable from the information processing device 100.

The information processing device 100, in addition to the components described above, may have, for example, a keyboard, a mouse, a display, a printer, a scanner, a microphone, a speaker, etc. Further, the information processing device 100 may have the recording medium I/F 304 and/or the recording medium 305 in plural. Further, the information processing device 100 may omit the recording medium I/F 304 and/or the recording medium 305.

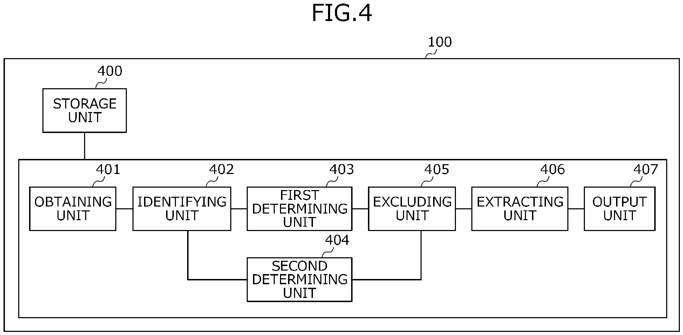

An example of a functional configuration of the information processing device 100 is described with reference to Fig. 4.

Fig. 4 is a block diagram of an example of the functional configuration of the information processing device 100. The information processing device 100 includes a storage unit 400, an obtaining unit 401, an identifying unit 402, a first determining unit 403, a second determining unit 404, an excluding unit 405, an extracting unit 406, and an output unit 407.

The storage unit 400 is implemented by, for example, a storage region such as the memory 302 or the recording medium 305 shown in Fig. 3. Hereinafter, a case is described, but not limitative, where the storage unit 400 is included in the information processing device 100. For example, the storage unit 400 may be included in a device different from the information processing device 100 so that the storage contents of the storage unit 400 may be referred to from the information processing device 100.

The obtaining unit 401 to the output unit 407 function as an example of a control unit. For example, the obtaining unit 401 to the output unit 407 implement respective functions thereof, for example, by causing the CPU 301 to execute a program stored in a storage region such as the memory 302 or the recording medium 305 shown in Fig. 3, or by the network I/F 303. The results of processing by the functional units are stored, for example, to a storage region such as the memory 302 or the recording medium 305 shown in Fig. 3.

The storage unit 400 is referred to during processing by the functional units or stores various pieces of information updated. The storage unit 400 stores, for example, a series of frames. A frame is image data. The series of frames is, for example, multiple pieces of image data contained in moving image data. The series of frames may be, for example, multiple pieces of image data continuously captured, instead of moving image data. The series of frames is obtained, for example, by the obtaining unit 401.

For example, in correlation with each of the series of frames reflecting a target object, the storage unit 400 stores a region reflecting the target object in the frame. A region reflecting a target object is identified, for example, by carrying out segmentation. A region reflecting a target object is identified, for example, by the identifying unit 402. The storage unit 400 may store, for example, a segmentation model implementing segmentation.

For each pair of two chronologically contiguous frames among the series of frames, the storage unit 400 stores a first index value that represents a degree of overlap between regions each identified from a corresponding one of the paired two frames. The first index value is, for example, an index value based on IoU. The first index value is calculated, for example, by the first determining unit 403.

For each pair of two sequentially contiguous frames among the series of frames, the storage unit 400 stores a second index value that represents a degree of similarity between the paired two frames, with respect to a predetermined type of feature. The second index value is, for example, an index value based on SIFT. The second index value is calculated, for example, by the second determining unit 404.

The storage unit 400 stores multiple samples for use in the prototype-kNN. The samples are, for example, image data. The samples are, for example, image data that represent a region reflecting a target object. The samples are generated, for example, by the extracting unit 406.

The obtaining unit 401 obtains various pieces of information for use in processing by the functional units. The obtaining unit 401 stores the obtained various pieces of information into the storage unit 400, or outputs the information to the functional units. The obtaining unit 401 may output various pieces of information previously stored in the storage unit 400 to the functional units. The obtaining unit 401 obtains various pieces of information, for example, based on user operation input. The obtaining unit 401 may obtain various pieces of information from a device different from the information processing device 100.

The obtaining unit 401 obtains, for example, a series of frames. For example, the obtaining unit 401 receives a series of frames from another computer. Another computer is, for example, the image capturing device 201. For example, the obtaining unit 401 may obtain a series of frames by accepting input of the series of frames, based on user operation input.

The obtaining unit 401 may accept a start trigger to start processing by any functional unit. The start trigger is, for example, a predetermined operation input by the user. The start trigger may be, for example, reception of predetermined information from another computer. The start trigger may be, for example, output of predetermined information by a functional unit. For example, the obtaining unit 401 accepts acquisition of a series of frames as a start trigger to start the processing by the identifying unit 402, the first determining unit 403, the second determining unit 404, the excluding unit 405, and the extracting unit 406.

The identifying unit 402 carries out segmentation for each of a series of frames reflecting a target object and thereby identifies a region reflecting the target object in the frame. For example, the identifying unit 402 applies a segmentation model to each of a series of frames and thereby identifies a region reflecting the target object in the frame.

For example, the identifying unit 402 applies a segmentation model to each of a series of frames and thereby identifies one or more regions reflecting each of one or more objects of the frame. For example, the identifying unit 402 uses an IoU technique to identify regions reflecting a same target object, among the one or more regions identified for each of the series of frames. As a result, the identifying unit 402 may identify regions to be samples for use in the prototype-kNN.

For each pair of two chronologically contiguous frames among the series of frames, the first determining unit 403 calculates a first index value that represents a degree of overlap between regions identified from the paired two frames by the identifying unit 402. For each pair of two chronologically contiguous frames among the series of frames, the first determining unit 403 determines whether the calculated first index value is at least equal to the first threshold value. For example, the first threshold value is set in advance by the user.

As a result, the first determining unit 403 may obtain a guidance for determining whether the regions identified from the paired two frames by the identifying unit 402 are suitable as samples to be used in the prototype-kNN. For example, for regions identified by the identifying unit 402 from two frames, respectively, of a pair whose first index value is determined to be less than the first threshold value, the first determining unit 403 may determine those regions as having a high probability of containing noise such as a background. Hence, the first determining unit 403 may determine that the regions identified by the identifying unit 402 from two frames, respectively, of a pair whose first index value is determined to be less than the first threshold value are not suitable as samples to be used in the prototype-kNN.

For each pair of two sequentially contiguous frames among the series of frames, the second determining unit 404 calculates a second index value that represents a degree of similarity between the paired two frames, with respect to a predetermined type of feature. For example, for each pair of two sequentially contiguous frames among the series of frames, the second determining unit 404 may calculate a second index value that represents a degree of similarity with respect to a predetermined type of feature between regions identified from the paired two frames by the identifying unit 402. For each pair of two sequentially contiguous frames among the series of frames, the second determining unit 404 determines whether the calculated second index value is at least equal to the second threshold value. For example, the second threshold value is set in advance by the user.

As a result, the second determining unit 404 may obtain a guidance for determining whether the regions identified from the paired two frames by the identifying unit 402 are suitable as samples to be used in the prototype-kNN. For example, for regions identified by the identifying unit 402 from two frames, respectively, of a pair whose second index value is determined less than the second threshold value, the second determining unit 404 may determine those regions as having a high probability of containing noise such as another object different from the target object. Hence, the second determining unit 404 may determine that the regions identified by the identifying unit 402 from two frames, respectively, of a pair whose second index value is determined to be less than the second threshold value are not suitable as samples to be used in the prototype-kNN.

The excluding unit 405 identifies a certain number of sequentially contiguous frames anterior and posterior to a pair of frames determined to be less than the first threshold value and/or less than second threshold value, the certain number being inclusive of the pair of frames, among the series of frames. For example, the certain number is set in advance by the user. The certain number is, for example, 10. The certain number may be, for example, 2. The certain number of frames may be, for example, only a pair of frames.

For example, the excluding unit 405 identifies a certain number of frames anterior and posterior to a pair determined to be less than the first threshold value but not less than the second threshold value, among the series of frame. For example, the excluding unit 405 identifies a certain number of frames anterior and posterior to a pair determined to be not less than the first threshold value but less than the second threshold value, among the series of frame. For example, the excluding unit 405 identifies a certain number of frames anterior and posterior to a pair determined to be less than the first threshold value and less than the second threshold value, among the series of frame.

The excluding unit 405 identifies remaining frames obtained by excluding the certain number of frames identified, from the series of frames. Thus, the excluding unit 405 may exclude, from the series of frames, frames containing regions not suitable as samples to be used in the prototype-kNN and leave frames containing regions suitable as samples to be used in the prototype-kNN.

From among the identified remaining frames, the extracting unit 406 extracts frames whose degree of similarity to the other frames with respect to a predetermined type of feature satisfies a predetermined condition. The predetermined condition is, for example, that the degree of similarity to the other frames with respect to a predetermined type of feature is relatively small. The predetermined condition is, for example, that the sum of third index values each representing a degree of similarity to each of the other frames is less than a third threshold value. The predetermined condition is, for example, that the frames are a predetermined number of frames starting from one having a smallest sum of the third index values each representing a degree of similarly to each of the other frames, among the remaining frames. For example, the predetermined number is set in advance by the user.

For example, for each of the identified remaining frames, the extracting unit 406 calculates a sum of index values that represent degrees of similarity with respect to a predetermined type of feature between the frame and other frames among the identified remaining frames. For example, the extracting unit 406 extracts a predetermined number of frames starting from one having the smallest sum calculated, among the identified remaining frames. This allows the extracting unit 406 to leave a suitable number of frames each containing a region suitable as a sample to be used in the prototype-kNN. The extracting unit 406 may eliminate frames similar in terms of an image feature, from the remaining frames containing regions suitable as the samples. This enables the extracting unit 406 to leave a suitable number of frames so as to reduce the processing time when detecting a patch attack by the prototype-kNN.

For example, the extracting unit 406 may extract a frame whose calculated sum is less than the third threshold value, from among the identified remaining frames. This allows the extracting unit 406 to leave a suitable number of frames each containing a region to be a sample used in the prototype-kNN. The extracting unit 406 may eliminate frames similar in terms of an image feature, from the remaining frames containing regions suitable as the samples. This enables the extracting unit 406 to leave a suitable number of frames so as to reduce the processing time when detecting a patch attack by the prototype-kNN.

The extracting unit 406 forms the prototype-kNN, based on regions each identified by the identifying unit 402 from a corresponding one of the extracted frames. The extracting unit 406 employs, as samples to be used in the prototype-kNN, the regions identified by the identifying unit 402 from the extracted frames, to form the prototype-kNN.

As a result, the extracting unit 406 enables detection of a patch attack by the prototype-kNN. The extracting unit 406 may reduce the processing time required when detecting a patch attack by the prototype-kNN. The extracting unit 406 may improve the accuracy of detecting a patch attack by the prototype-kNN.

The output unit 407 outputs a processing result of at least any one of the functional units. The form of output is, for example, display onto a display device, print output to a printer, transmission to an external device via the network I/F 303, or storage into a storage region such as the memory 302 or the recording medium 305. Thus, the output unit 407 enables notifying the user of the processing result of at least any one of the functional units, to improve the convenience of the information processing device 100.

For example, the output unit 407 outputs regions each identified by the identifying unit 402 from a corresponding one of frames extracted by the extracting unit 406. For example, in such a manner as to allow reference by the user, the output unit 407 outputs regions each identified by the identifying unit 402 from a corresponding one of frames extracted by the extracting unit 406. For example, the output unit 407 may transmit, to another computer, regions each identified by the identifying unit 402 from a corresponding one of frames extracted by the extracting unit 406. Hence, the output unit 407 can make it possible to externally form the prototype-kNN.

For example, the output unit 407 outputs the prototype-kNN formed by the extracting unit 406. For example, in such a manner as to allow reference by the user, the output unit 407 outputs the prototype-kNN formed by the extracting unit 406. For example, the output unit 407 may transmit, to another computer, the prototype-kNN formed by the extracting unit 406. As a result, the output unit 407 can make it possible to externally use the prototype-kNN formed by the extracting unit 406.

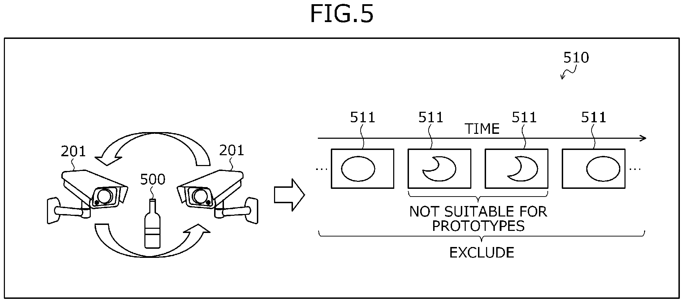

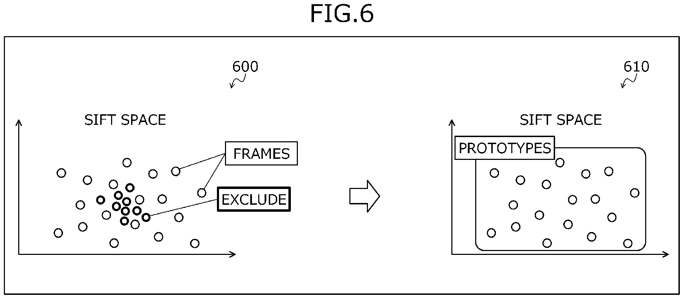

An example of operation of the information processing device 100 is described with reference to Figs. 5 and 6.

Figs. 5 and 6 are explanatory views of an example of operation of the information processing device 100. (5-1) In Fig. 5, the user shoots an object 500 from each of multiple different shooting directions while moving the image capturing device 201. Based on user operation input, the image capturing device 201 generates a frame group 510 by shooting the object 500 from the different shooting directions. The frame group 510 includes multiple sequentially contiguous frames 511.

For convenience of description, an index is assumed to be assigned to each of the frames 511 in ascending order along time series. The index is, for example, an integer at least equal to 1. For example, the index is 1, 2, ..., N. N is the number of the frames 511.

Although here, a case is described in which the user shoots the object 500 while moving the image capturing device 201, this is not limitative. For example, the user may shoot the object 500 while moving or rotating the object 500. The image capturing device 201 transmits the generated frame group 510 to the information processing device 100. The information processing device 100 receives the frame group 510 from the image capturing device 201.

(5-2) The information processing device 100 performs segmentation on each of the frames 511 and thereby identifies, in the frame 511, a region reflecting the object 500. In the following description, the region identified by segmentation may be indicated as "segmentation range".

In the description hereinafter, the information processing device 100 extracts, as frames 511 containing regions to be the prototypes, frames 511 having at least a certain segmentation range accuracy and different in image features. For example, a segmentation range is treated as having higher accuracy the less noise that the segmentation range has, excluding the object 500. Noise includes background, another object other than the object 500, etc.

(5-3) In a case in which the degree of variation of the segmentation range in a short period of time is relatively large in the frame group 510, that segmentation range is considered as being low in accuracy and therefore, not suitable for the prototypes. In the description hereinafter, for example, the information processing device 100 evaluates the degree of variation of the segmentation range, based on a IoU feature between segmentation ranges and based on the degree of similarity in SIFT feature between frames.

To this end, for each pair of two chronologically contiguous frames 511 in the frame group 510, the information processing device 100 calculates an IoU feature that represents a degree of overlap between segmentation ranges each identified from a corresponding one of the paired two frames 511. The IoU feature is, for example, (magnitude of a portion common to two segmentation ranges)/(magnitude of union of two segmentation ranges). The magnitude is, for example, a region. The IoU feature is, for example, a value at least equal to 0 but not more than 1.

For each pair of two sequentially contiguous frames 511 in the frame group 510, the information processing device 100 calculates a degree of similarity between SIFT features of the paired two frames 511. The SIFT feature is a feature not using color information. The SIFT feature is a feature not easily subject to planar scaling and rotation of an object reflected in a frame, or to illumination changes. The degree of similarity between SIFT features is, for example, cosine similarity. The degree of similarity between SIFT features may be calculated, for example, on the basis of feature point pairs based on Euclidean distance. The degree of similarity between SIFT features is, for example, (F_{A}·F_{B})/(128·128). F_{A} is Σᵢf_{A,i} related to a frame 511 on one hand of a pair. f_{A,i} is a feature of an i^{th} feature point in first one of the frame 511 of the pair. F_{B} is Σᵢf_{B,i} related to a second one of the frame 511 of the pair. f_{B,i} is a feature of an i^{th} feature point in the second one of the frame 511 of the pair.

(5-4) The information processing device 100 stores a first threshold value for the IoU feature, set in advance by the user. The information processing device 100 stores a second threshold value for the degree of similarity, set in advance by the user. The information processing device 100 prepares a blank index-to-be-excluded list.

In a case where, for a pair consisting of an i^{th} frame 511 and an (i+1)^{th} frame 511, the calculated IoU feature is less than the first threshold value, the information processing device 100 registers indices i-k to i+k into the index-to-be-excluded list. For example, k is set in advance by the user. For example, k may be set automatically depending on the frame rate. In a case where, for the pair consisting of an i^{th} frame 511 and an (i+1)^{th} frame, the calculated degree of similarity is less than the second threshold value, the information processing device 100 registers indices i-k to i+k into the index-to-be-excluded list. At this time, for example, the information processing device 100 registers the indices into the index-to-be-excluded list without any duplication.

This allows the information processing device 100 to exclude, from targets to obtain the prototypes, frames 511 around any pair including a segmentation range not suitable for the prototypes. For example, based on the IoU feature, the information processing device 100 may exclude, from targets to obtain the prototypes, frames 511 around any pair including a segmentation range that contains noise such as background. For example, based on the degree of similarity, the information processing device 100 may exclude, from targets to obtain the prototypes, frames 511 around any pair including a segmentation range that contains noise such as another object. Description of Fig. 6 follows.

(6-1) In Fig. 6, the information processing device 100 identifies remaining frames 511 by excluding frames of the frame group 510 whose indices are in the index-to-be-excluded list. This allows the information processing device 100 to leave frames 511 each including a segmentation range suitable for the prototypes, from the frame group 510. A graph 600 depicted in Fig. 6 represents SIFT feature space. The graph 600 represents points each corresponding to each of the remaining frames 511.

(6-2) The information processing device 100 has a property that leads to an increase in processing time when detecting a patch attack by the prototype-kNN when there are the prototypes similar in SIFT feature. The information processing device 100 also has a property that improvement of the accuracy of detecting a patch attack by the prototype-kNN is difficult even when there are the prototypes similar in SIFT feature.

Thus, for each of the identified remaining frames 511, the information processing device 100 calculates a sum of degrees of similarity to the other frames 511 in terms of SIFT feature among the remaining frames 511. This enables the information processing device 100 to obtain a guidance for selecting frames 511 preferred to be left as targets to obtain the prototypes. The information processing device 100 selects and extracts a predetermined number of frames 511 starting from one having the smallest sum calculated, among the identified remaining frames 511.

As a result, as shown in a graph 610, the information processing device 100 may leave a predetermined number of frames 511 having a diversity of image features as targets to obtain the prototypes. The information processing device 100 may exclude frames 511 having similar image features. Thus, the information processing device 100 may leave a predetermined number of frames 511 each including a segmentation range suitable for the prototypes. Accordingly, the information processing device 100 may reduce the processing time required when detecting a patch attack by the prototype-kNN.

(6-3) The information processing device 100 employs, as the prototypes, a segmentation range identified from each of the extracted frames 511. The information processing device 100 uses the employed prototypes to form the prototype-kNN. The information processing device 100 provides the user with the prototype-kNN.

As a result, the information processing device 100 may enable detection of a patch attack by the prototype-kNN. The information processing device 100 may reduce the processing time when detecting a patch attack by the prototype-kNN. The information processing device 100 may improve the accuracy of detecting a patch attack by the prototype-kNN.

In this manner, the information processing device 100 may exclude frames 511 that include a segmentation range having a relatively low accuracy, based on the IoU feature and the degree of similarity in SIFT feature. Hence, the information processing device 100 may exclude frames 511 including a segmentation range having background reflected erroneously. The information processing device 100 may exclude frames 511 including a segmentation range having another object reflected erroneously.

By using both the IoU feature and the degree of similarity in SIFT feature, the information processing device 100 may comprehensively exclude frames 511 including a segmentation range not suitable for the prototypes. The information processing device 100 may eliminate frames 511 similar in image feature after excluding the frames 511 including a segmentation range not suitable for the prototypes. The information processing device 100 may suitably decrease the number of the prototypes and thereby, achieve reduction in the processing time when detecting a patch attack by the prototype-kNN.

In a case of eliminating the frames 511 similar in image feature without excluding frames 511 including a segmentation range not suitable for the prototypes, the frames 511 including a segmentation range not suitable for the prototypes tend to remain. On the other hand, the information processing device 100 may leave frames 511 including a segmentation range suitable for the prototypes, instead of leaving the frames 511 including a segmentation range not suitable for the prototypes.

For example, a conventional technique of extracting frames at regular time intervals from among the series of frames obtained by shooting an object while changing the shooting direction and employing, as the prototypes, a segmentation range identified from each of the extracted frames is conceivable. In the conventional technique, a segmentation range unsuitable for the prototypes may be employed as the prototypes.

On the other hand, the information processing device 100 may prevent a segmentation range unsuitable for the prototypes from being employed as the prototypes. For example, in a case where a segmentation range becomes unsuitable due to reflection of light at a specific angle of view, the information processing device 100 may prevent the segmentation range from being employed as the prototypes. The information processing device 100 may reduce the work burden on the user.

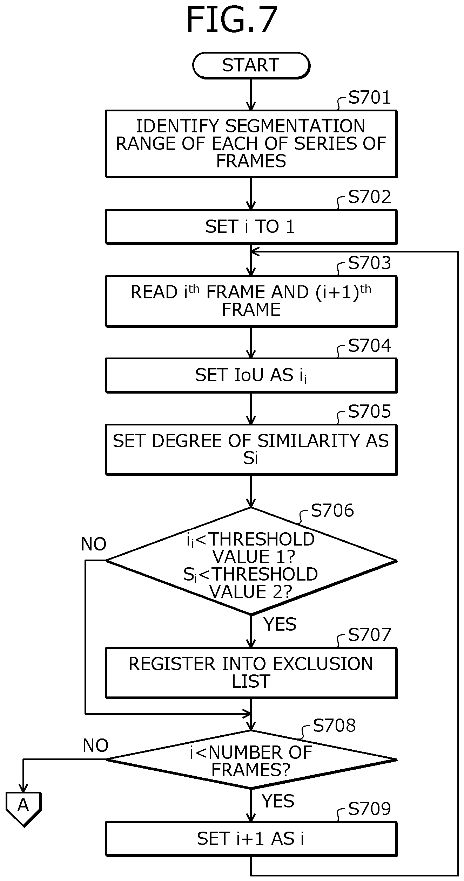

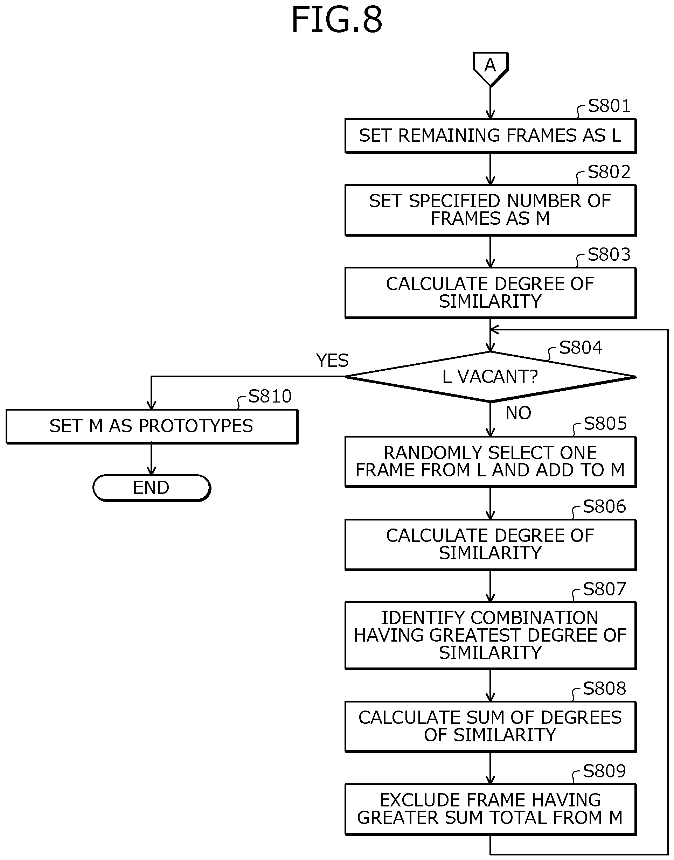

An example of an overall processing procedure of the information processing device 100 executes is described with reference to Figs. 7 and 8. Overall processing is implemented, for example, by the CPU 301, a storage region such as the memory 302 or the recording medium 305, and the network I/F 303, shown in Fig. 3.

Figs. 7 and 8 are flowcharts depicting an example of the overall processing procedure. In Fig. 7, the information processing device 100 uses a segmentation model to identify a segmentation range of each of a series of frames of moving image data (step S701). The information processing device 100 sets i to 1 (step S702).

The information processing device 100 reads an i^{th} frame and an (i+1)^{th} frame among the series of frames (step S703). The information processing device 100 sets, as iᵢ, an IoU feature between the segmentation ranges of the i^{th} frame and the (i+1)^{th} frame (step S704). The information processing device 100 sets, as Si, a degree of similarity between SIFT features of the i^{th} frame and the (i+1)^{th} (step S705).

The information processing device 100 determines whether iᵢ<threshold value 1 and/or Sᵢ<threshold value 2 is established (step S706). Here, when iᵢ<threshold value 1 and/or Sᵢ<threshold value 2 is established (step S706: YES), then the information processing device 100 proceeds to the processing at step S707. On the other hand, if iᵢ≥threshold value 1 and Sᵢ≥threshold value 2 are established (step S706: NO), then the information processing device 100 proceeds to the processing at step S708.

At step S707, the information processing device 100 registers, into an exclusion list, an index of each of multiple frames from an (i-k)^{th} frame to an (i+k)^{th} frame (step S707). The information processing device 100 then proceeds to the processing at step S708.

At step S708, the information processing device 100 determines whether i<number of frames in moving image data is established (step S708). Here, when i<number of frames in moving image data is established (step S708: YES), then the information processing device 100 sets i+1 to i (step S709) and returns to the processing at step S703. On the other hand, when i≥number of frames in moving image data is established (step S708: NO), then the information processing device 100 proceeds to the processing at step S801 of Fig. 8.

In Fig. 8, the information processing device 100 sets, as L, remaining frames obtained by excluding frames whose indices have been registered in the exclusion list, among the series of frames (step S801). The information processing device 100 sets, as M, a specified number of frames extracted at random from among the remaining frames (step S802). For each combination among all combinations of two frames at M, the information processing device 100 calculates a degree of similarity in SIFT feature between the two frames of the each combination (step S803).

The information processing device 100 determines whether L is vacant (step S804). Here, when L is vacant (step S804: YES), the information processing device 100 proceeds to the processing at step S810. On the other hand, when L is not vacant (step S804: NO), the information processing device 100 proceeds to the processing at step S805.

At step S805, the information processing device 100 selects one frame at random from L and adds the frame to M (step S805). For each combination of the added frame and other frames in M, the information processing device 100 calculates a degree of similarity in SIFT feature between the two frames of the combination (step S806). The information processing device 100 identifies a combination having the greatest degree of similarity (step S807).

For each of the two frames of the identified combination, the information processing device 100 calculates a sum of degrees of similarity between that frame and other frames (step S808). The information processing device 100 excludes, from M, the frame having a greater sum calculated, of the identified combination (step S809). The information processing device 100 then returns to the processing at step S804.

At step S810, the information processing device 100 sets M as the prototypes (step S810). The information processing device 100 then terminates the overall processing. Thus, the information processing device 100 may set suitable prototypes.

Here, the information processing device 100 may change the execution order of processing at some steps of the flowcharts in Figs. 7 and 8. For example, the order of processing at steps S704 and S705 may be interchanged. The information processing device 100 may omit processing at some steps of the flowcharts in Figs. 7 and 8.

As described in the foregoing, according to the information processing device 100, segmentation is carried out for each of a series of frames reflecting an object so that a region reflecting the object in the frame may be identified. According to the information processing device 100, for each pair of two chronologically contiguous frames among the series of frames, whether the first index value representing a degree of similarity between regions identified from the paired two frames is at least equal to the first threshold value may be detected. According to the information processing device 100, for each pair of two sequentially contiguous frames among the series of frames, whether the second index value representing a degree of similarity between the two frames of the pair with respect to a predetermined type of feature is at least equal to the second threshold value may be detected. According to the information processing device 100, remaining frames may be identified that are obtained by eliminating, from a series of frames, a certain number of sequentially contiguous frames anterior and posterior to a pair that is determined to be less than the first threshold value and/or less than the second threshold value, the certain number being inclusive of the determined pair. According to the information processing device 100, from among the identified remaining frames, frames may be extracted whose degree of similarity to the other frames with respect to a predetermined type of feature satisfies a predetermined condition. As a result, the information processing device 100 may extract frames suitable as targets to obtain the prototypes. The information processing device 100 may facilitate obtaining the prototypes.

According to the information processing device 100, the prototype-kNN may be formed based on regions identified from the extracted frames. Thus, the information processing device 100 enables use of the prototype-kNN that uses suitable prototypes.

According to the information processing device 100, for each of the identified remaining frames, the sum of the index values may be calculated that represent degrees of similarity with respect to a predetermined type of feature, between the frame and other frames among the identified remaining frames. According to the information processing device 100, among the identified remaining frames, a predetermined number of frames may be extracted starting from one having the smallest sum calculated. As a result, the information processing device 100 may extract a suitable number of frames as targets to obtain the prototypes.

According to the information processing device 100, a pair of frames may be identified that is determined to be less than the first threshold value and/or less than the second threshold value. The information processing device 100 may identify a certain number of frames, from frames of a prescribed number anterior to the identified pair, to frames of a prescribed number posterior to the identified pair. The information processing device 100 may exclude the certain number of frames identified, from the series of frames. This allows the information processing device 100 to efficiently exclude frames not suitable as targets to obtain the prototypes.

According to the information processing device 100, a value based on IoU may be calculated as the first index value. This allows the information processing device 100 to use an index value that suitably represents the degree of overlap between regions identified from two paired frames. The information processing device 100 may facilitate extraction of frames suitable as targets to obtain the prototypes.

According to the information processing device 100, a value based on SIFT may be calculated as the second index value. This allows the information processing device 100 to use an index value that suitably represents the degree of similarity with respect to a predetermined type of feature between the two paired frames. The information processing device 100 may facilitate extraction of frames suitable as targets to obtain the prototypes.

The information processing method described in the present embodiment may be implemented by executing a prepared program on a computer such as a personal computer or a workstation. The information processing program described is stored on a non-transitory, computer-readable recording medium, and is read out from the computer-readable medium and executed by the computer. The recording medium is a hard disk, a flexible disk, a compact (CD)-ROM, a magneto-optical (MO) disk, a digital versatile disk (DVD), etc. The program may be distributed through a network such as the Internet.

According to one aspect, samples suitable for use in the prototype-kNN may be obtained.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A computer-readable recording medium having stored therein a program for causing a computer to execute a process, the process comprising:
performing segmentation to each frame (511) of a series of frames reflecting an object (500), and thereby identifying a region reflecting the object in the each frame;
for each pair of two chronologically contiguous frames among the series of frames, determining whether a first index value representing a degree of overlap between regions is at least equal to a first threshold value, the regions each being identified from a corresponding one of the pair of two chronologically contiguous frames;
for each pair of two sequentially contiguous frames among the series of frames, determining whether a second index value representing a degree of similarity between the pair of two sequentially contiguous frames with respect to a specific type of feature is at least equal to a second threshold value;
identifying remaining frames obtained by excluding, from the series of frames, a number of sequentially contiguous frames anterior and posterior to the pair for which the first index is determined to be less than the first threshold value and/or for which the second index is determined to be less than the second threshold value, the number being inclusive of the pair; and
extracting, among the identified remaining frames, a first frame whose degree of similarity to a second frame with respect to the specific type of feature satisfies a specific condition.

2. The recording medium according to claim 1, the process further comprising forming a prototype-k-nearest neighbor (kNN), based on the region identified from the extracted first frame.

3. The recording medium according to claim 1 or 2, the process further comprising for each one of the identified remaining frames, calculating a sum of index values each representing a degree of similarity between the each one and other frames among the identified remaining frames with respect to the specific type of feature, wherein
the extracting includes extracting a specific number of frames, starting from one having a smallest sum calculated, among the identified remaining frames.

4. The recording medium according to claim 1 or 2, wherein
the identifying includes excluding, from the series of frames, the number of sequentially contiguous frames that are from a prescribed number of frames anterior to the pair for which the first index is determined to be less than the first threshold value and/or for which the second index is determined to be less than the second threshold value, to a prescribed number of frames posterior to the pair for which the first index is determined to be less than the first threshold value and/or for which the second index is determined to be less than the second threshold value.

5. The recording medium according to claim 1 or 2, wherein
the first index value is based on intersection over union (IoU).

6. The recording medium according to claim 1 or 2, wherein
the second index value is based on scale invariant feature transform (SIFT).

7. An information processing method executed by a computer, the information processing method comprising:
performing segmentation to each frame (511) of a series of frames reflecting an object (500), and thereby identifying a region reflecting the object in the each frame;
for each pair of two chronologically contiguous frames among the series of frames, determining whether a first index value representing a degree of overlap between regions is at least equal to a first threshold value, the regions each being identified from a corresponding one of the pair of two chronologically contiguous frames;
for each pair of two sequentially contiguous frames among the series of frames, determining whether a second index value representing a degree of similarity between the pair of two sequentially contiguous frames with respect to a specific type of feature is at least equal to a second threshold value;
identifying remaining frames obtained by excluding, from the series of frames, a number of sequentially contiguous frames anterior and posterior to the pair for which the first index is determined to be less than the first threshold value and/or for which the second index is determined to be less than the second threshold value, the number being inclusive of the pair; and
extracting, among the identified remaining frames, a first frame whose degree of similarity to a second frame with respect to the specific type of feature satisfies a specific condition.

8. An information processing device, comprising:
a memory (302); and
a processor (301) coupled to the memory, the processor configured to:
perform segmentation to each frame (511) of a series of frames reflecting an object (500), and thereby identify a region reflecting the object in the each frame;
for each pair of two chronologically contiguous frames among the series of frames, determine whether a first index value representing a degree of overlap between regions is at least equal to a first threshold value, the regions each being identified from a corresponding one of the pair of two chronologically contiguous frames;
for each pair of two sequentially contiguous frames among the series of frames, determine whether a second index value representing a degree of similarity between the pair of two sequentially contiguous frames with respect to a specific type of feature is at least equal to a second threshold value;
identify remaining frames obtained by excluding, from the series of frames, a number of sequentially contiguous frames anterior and posterior to the pair for which the first index is determined to be less than the first threshold value and/or for which the second index is determined to be less than the second threshold value, the number being inclusive of the pair; and
extract, among the identified remaining frames, a first frame whose degree of similarity to a second frame with respect to the specific type of feature satisfies a specific condition.
